## Europäisches Patentamt
## European Patent Office
## Office européen des brevets

(19)

(11) Veröffentlichungsnummer : **0 039 799**
**B1**

(12)

# EUROPÄISCHE PATENTSCHRIFT

(45) Veröffentlichungstag der Patentschrift :
04.07.84

(21) Anmeldenummer : **81102965.1**

(22) Anmeldetag : **16.04.81**

(51) Int. Cl.³ : **G 01 V 9/04, G 08 B 13/18**

(54) **Vorrichtung zum Erfassen von Bewegungen.**

(30) Priorität : **09.05.80 DE 3017862**

(43) Veröffentlichungstag der Anmeldung :
**18.11.81 Patentblatt 81/46**

(45) Bekanntmachung des Hinweises auf die Patenterteilung : **04.07.84 Patentblatt 84/27**

(84) Benannte Vertragsstaaten :
**DE FR GB**

(56) Entgegenhaltungen :
**DE-A- 2 329 937**
**DE-A- 2 717 507**
**GB-A- 1 082 973**

(73) Patentinhaber : **SIEMENS AKTIENGESELLSCHAFT**
**Berlin und München Wittelsbacherplatz 2**
**D-8000 München 2 (DE)**

(72) Erfinder : **Reiner, Robert, Dipl.-Ing.**
**Pappelstrasse 18**
**D-8014 Neubiberg (DE)**
Erfinder : **Schatter, Eckart, Dipl.-Ing.**
**Herzog-Stephan-Weg 5**
**D-8011 Zorneding (DE)**

## Beschreibung

Die Erfindung betrifft eine Vorrichtung zum Erfassen von Bewegungen eines Gegenstandes (Bewegungsmelder) mit Licht, insbesondere mit Infrarot-Licht.

Übliche Bewegungsmelder für Alarmanlagen, Türöffner und dergleichen arbeiten entweder nach dem Doppler-Prinzip mit insbesondere Mikrowellen oder Ultraschall oder aber als Lichtschranken. Bei den nach dem Doppler-Prinzip arbeitenden Bewegungsmeldern wird die durch eine Bewegung eines Objektes in dem überwachten Raum hervorgerufene Frequenzänderung der reflektierten Signale ausgewertet. Lichtschranken haben einen Lichtsender und einen Licht-empfänger für das vom Lichtsender abgegebene Licht. Eine Bewegung im überwachten Raum kann erfaßt werden, wenn das sich bewegende Objekt in die Übertragungsstrecke zwischen Lichtsender und Lichtempfänger eintritt oder diese verläßt.

Bei Lichtschranken, die mit Halbleiterbauelementen für den Lichtsender und den Lichtempfänger ausgestattet sind, ist die Verwendung des Doppler-Prinzips nicht möglich, da das Licht nur eine eingeschränkte Übertragungsbandbreite aufweist, die auf das relativ schmale Spektrum zurückzuführen ist, in dem der Lichtsender Licht abgibt beziehungsweise der Lichtempfänger empfindlich ist.

Nach dem Doppler-Prinzip arbeitende Bewegungsmelder haben aber den Vorteil, daß auch graduelle Änderungen in einem überwachten Raum erkannt werden können, während Lichtschranken derzeit nur eine sogenannte Ja/Nein-Aussage ermöglichen.

Ein Bewegungsmelder mit einer Lichtschranke ist aus der DE-A-23 29 937 bekannt. Die Auswertung eines empfangenen Lichtsignals im Lichtempfänger erfolgt hierbei in der Weise, daß das Erreichen eines bestimmten Schwellwertes des Lichtimpulses über eine Bewertungsschwelleneinrichtung angezeigt wird, und die Dauer der Schwellwertüberschreitung digital erfaßt, gespeichert und mit einem Bezugswert verglichen wird. Tritt eine Abweichung vom Bezugswert auf, so ist dies ein Zeichen dafür, daß ein Körper den Strahlengang beeinträchtigt hat.

Es ist daher Aufgabe der Erfindung eine Vorrichtung der eingangs genannten Art anzugeben, die ohne das Doppler-Prinzip auch die Erfassung gradueller Änderungen in einem überwachten Bereich erlaubt.

Diese Aufgabe wird erfindungsgemäß durch den Gegenstand des Anspruchs 1 gelöst.

In einer Weiterbildung der Erfindung ist vorgesehen, daß die Lichtimpulse exponentiell oder linear ansteigende und/oder exponentiell oder linear abfallende Flanken aufweisen.

In einer anderen Weiterbildung der Erfindung ist vorgesehen, daß die Lichtimpulse synchron mit der Netzspannung abgegeben werden. Außerdem kann den Lichtimpulsen ein Trägersignal überlagert werden. Schließlich ist es auch noch möglich, daß den Lichtimpulsen ein Codewort aufgeprägt wird.

Abhängig von den Verhältnissen auf der Übertragungsstrecke trifft bei der Erfindung der vom Lichtsender abgegebene Impuls mit unterschiedlichen Amplituden beim Lichtempfänger ein und wird dort mit Hilfe der Bewertungsschwelleneinrichtung in entsprechende Zeiten umgesetzt, die digital gemessen und gespeichert werden können. Eine digitale Verarbeitung der Zeiten ist im Gegensatz zur Amplitude wesentlich einfacher.

Abhängig von einem bestimmten Anwendungsfall werden mehrere derartige sogenannte Rampen-Impulse im Lichtempfänger ausgewertet und miteinander verglichen. Je nach der Abweichung der ermittelten Zeiten wird entschieden, ob im zu überwachenden Raum Veränderungen eingetreten sind.

Anhand der Zeichnung wird die Erfindung nachfolgend beispielsweise näher erläutert. Es zeigen :

Figur 1 ein Blockschaltbild der erfindungsgemäßen Vorrichtung und

Figur 2 den Verlauf von Impulsen bei der Erfindung.

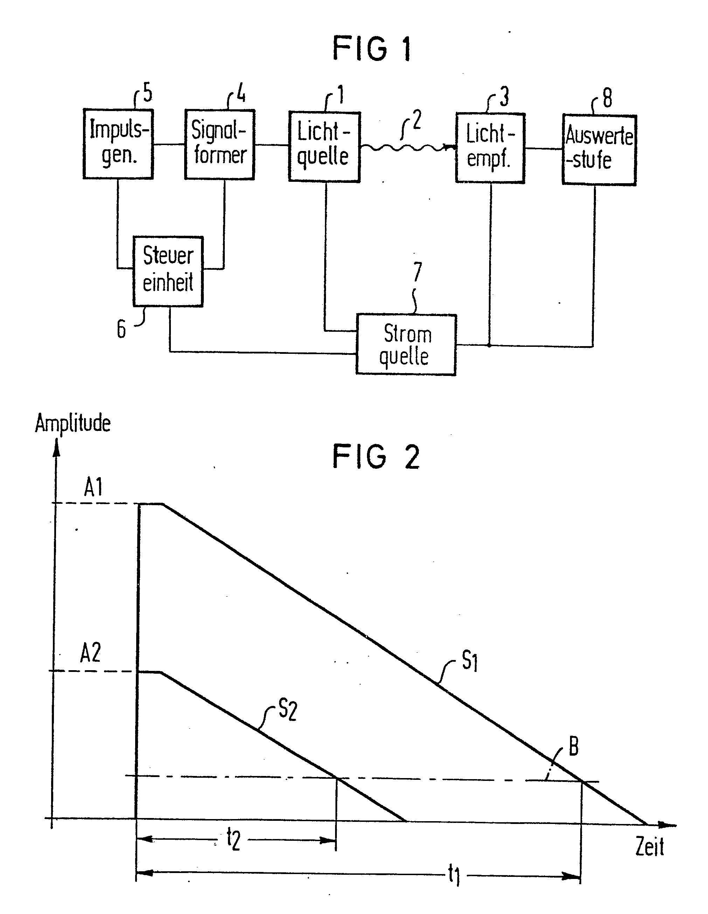

In Fig. 1 sendet eine Lichtquelle 1 in der Form einer Infrarot-Leuchtdiode Licht (durch einen Pfeil 2 angedeutet) zu einem Lichtempfänger 3, der einen für Infrarot Licht empfindlichen Fototransistor aufweist. Der Lichtquelle 1 ist ein Signalformer 4 vorgeschaltet, der elektrische Impulse mit steil ansteigenden und langsam abfallenden Flanken an die Lichtquelle 1 abgibt. Diese Impulse erzeugt der Signalformer 4 aus Impulsen, die von einem Impulsgenerator 5 geliefert werden. Diese, vom Impulsgenerator 5 abgegebenen Impulse können beispielsweise Rechteck-Impulse sein. Der Signalformer 4 und der Impulsgenerator 5 sind weiterhin mit einer Steuereinheit 6 verbunden, durch die der Signalformer 4 und der Impulsgenerator 5 in der gewünschten Weise ansteuerbar sind. Eine Stromquelle 7 dient zur Versorgung der Lichtquelle 1, des Lichtempfängers 3, der Steuereinheit 6, des Signalformers 4, des Impulsgenerators 4 sowie einer dem Lichtempfänger 3 nachgeschalteten Auswertestufe 8.

Die Lichtquelle 1 strahlt einen Infrarot-Impuls ab, der eine steil ansteigende und eine langsam abfallende Flanke aufweist (vergleiche Fig. 2) und beispielsweise durch ein Signal S1 in Fig. 2 gezeigt ist. Dieses Signal S1 weist eine Amplitude A1 auf. Wenn sich in der Übertragungsstrecke keine Hindernisse befinden, trifft dieses Signal S1 unverändert beim Lichtempfänger 3 ein. Sind dagegen in der Übertragungsstrecke Hindernisse vorhanden, so wird das Signal S1 gedämpft und trifft als Signal S2 mit einer Amplitude A2 beim Lichtempfänger 3 ein. Die Signale S1 und S2 werden mit Hilfe einer Bewertungsschwelle B im Empfänger 3 in entsprechende Zeiten t1 und t2 umgesetzt, die digital gemessen und gespeichert werden. Die digitale Verarbeitung der Zeiten t1 und t2 ist im Gegensatz zu einer digitalen Verarbeitung der Amplitude A sehr einfach.

Die erfindungsgemäße Vorrichtung basiert nun auf einer Umkehr dieses Prinzips.

Wenn der Sender 1 einen Rechteckimpuls mit einer Mindestdauer $t_3$ ausstrahlt und der Empfänger eine Bewertungsschwelle beginnend bei größter Empfindlichkeit in Richtung unempfindlich linear oder exponentiell verschiebt, wobei er den gesamten Empfindlichkeitsbereich in einer Zeit $t_3$ durchläuft, wird die Empfangsamplitude gleichermaßen in eine Zeit umgewandelt.

### Ansprüche

1. Vorrichtung zum Erfassen von Bewegungen eines Gegenstandes mit Licht, insbesondere mit Infrarot-Licht, mit
— einem Lichtimpulse abstrahlenden Lichtsender (1),
— einem Lichtempfänger (3) für die Lichtimpulse, welcher eine Bewertungsschwelleneinrichtung sowie Einrichtungen zum digitalen Erfassen, Speichern und Vergleichen der jeweiligen Dauer der Überschreitung der Bewertungsschwelle durch die Lichtimpulse aufweist, dadurch gekennzeichnet, daß
— Einrichtungen zur Verschiebung der Bewertungsschwelle vorgesehen sind, mittels welcher die Bewertungsschwelle innerhalb eines Zeitraums, der kleiner ist als die Mindestdauer der abgestrahlten Lichtimpulse, linear oder exponentiell von einem Bereich hoher Empfangsempfindlichkeit in einen empfangsunempfindlichen Bereich verschiebbar ist.

2. Vorrichtung nach Anspruch 1, dadurch gekennzeichnet, daß die Lichtimpulse (S1, S2) exponentiell oder linear ansteigende und/oder exponentiell oder linear abfallende Flanken aufweisen.

3. Vorrichtung nach Anspruch 1 oder 2, dadurch gekennzeichnet, daß die Lichtimpulse (S1, S2) synchron mit der Netzspannung abgegeben werden.

4. Vorrichtung nach einem der Ansprüche 1 bis 3, dadurch gekennzeichnet, daß die Lichtimpulse (S1, S2) einem Trägersignal überlagert sind.

5. Vorrichtung nach einem der Ansprüche 1 bis 4, dadurch gekennzeichnet, daß den Lichtimpulsen (S1, S2) ein Codewort aufgeprägt ist.

### Claims

1. A motion detection device for detecting object motion by light, in particular infrared light, having
— a light transmitter (1) which emits light pulses,
— a light receiver (3) for the light pulses which comprises an evaluation threshold device and devices for the digital detection, storage and comparison of the respective duration of overshooting of the evaluation threshold by the light pulses,
characterised in that
— devices are provided to shift the evaluation threshold, by means of which the evaluation threshold is linearly or exponentially movable from a region of high reception sensitivity into an insensitive reception region within a time interval smaller than the minimum duration of the emitted light pulses.

2. A device as claimed in Claim 1, characterised in that the light pulses (S1, S2) have exponential or linear leading and/or exponential or linear trailing edges.

3. A device as claimed in Claim 1 or 2, characterised in that the light pulses (S1, S2) are emitted in synchronism with the mains voltage.

4. A device as claimed in one of Claims 1 to 3, characterised in that the light pulses (S1, S2) are superimposed upon a carrier signal.

5. A device as claimed in one of Claims 1 to 4, characterised in that a code word is imprinted upon the light pulses (S1, S2).

### Revendications

1. Dispositif pour détecter des mouvements d'un objet à l'aide de lumière, notamment à l'aide de lumière infrarouge, comportant
— un émetteur de lumière (1) émettant des impulsions de lumière,
— un récepteur de lumière (3) pour les impulsions de lumière, qui comporte un dispositif à seuil d'évaluation ainsi que des dispositifs pour détecter, mémoriser et comparer numériquement la durée respective du dépassement du seuil d'évaluation par les impulsions de lumière caractérisé par le fait qu'il est prévu
— des dispositifs pour décaler le seuil d'évaluation, au moyen desquels le seuil d'évaluation peut être décalé, linéairement ou exponentiellement, à l'intérieur d'un intervalle de temps qui est plus faible que la durée moyenne des impulsions de lumière rayonnées, à partir d'une région présentant une sensibilité de réception importante dans une région insensible à la réception.

2. Dispositif suivant la revendication 1, caractérisé par le fait que les impulsions de lumière (S1, S2) présentent des flancs qui montent exponentiellement ou linéairement et/ou des flancs qui descendent exponentiellement ou linéairement.

3. Dispositif suivant la revendication 1 ou 2, caractérisé par le fait que les impulsions de lumière (S1, S2) sont délivrées en synchronisme avec la tension du réseau.

4. Dispositif suivant l'une des revendications 1 à 3, caractérisé par le fait que les impulsions de lumière (S1, S2) sont superposées par un signal porteur.

5. Dispositif suivant l'une des revendications 1 à 4, caractérisé par le fait qu'un mot de code est imposé aux impulsions de lumière (S1, S2).

**0 039 799**

FIG 1

FIG 2